# EUROPÄISCHE PATENTSCHRIFT

(11) **EP 1 943 878 B1**
(45) Veröffentlichungstag und Bekanntmachung des Hinweises auf die Patenterteilung: **25.03.2009**
(21) Anmeldenummer: 06807106.7
(22) Anmeldetag: 10.10.2006
(51) Int. Cl.: H05B 6/04

(54) **KOCHFELD UND VERFAHREN ZUM BETREIBEN EINES KOCHFELDS**
COOKING HOB AND METHOD FOR THE OPERATION OF A COOKING HOB
PLAQUE DE CUISSON ET PROCEDE PERMETTANT DE FAIRE FONCTIONNER UNE PLAQUE DE CUISSON

(30) Priorität: 27.10.2005 ES 200502708
(43) Veröffentlichungstag der Anmeldung: 16.07.2008
(73) Patentinhaber: BSH Bosch und Siemens Hausgeräte GmbH, 81739 München (DE)
(72) Erfinder: ACERO ACERO, Jesus, E-50002 Zaragoza (ES); BURDIO PINILLA, José Miguel, E-50018 Zaragoza (ES); GARCIA JIMENEZ, Jose-Ramon, E-50009 Zaragoza (ES); GARDE ARANDA, Ignacio, E-50017 Zaragoza (ES); HERNANDEZ BLASCO, Pablo Jesus, E-50017 Zaragoza (ES); LLORENTE GIL, Sergio, E-50009 Zaragoza (ES); LORENTE PEREZ, Alfonso, E-50013 Zaragoza (ES); MONTERDE AZNAR, Fernando, E-50013 Zaragoza (ES); PEINADO ADIEGO, Ramon, E-50008 Zaragoza (ES)
(86) Internationale Anmeldenummer: PCT/EP2006/067220
(87) Internationale Veröffentlichungsnummer: WO 2007/048700

(56) Entgegenhaltungen:
- EP-A- 1 194 009
- EP-A1- 0 926 926
- WO-A2-20/05043737
- DE-A1- 19 654 268
- US-B1- 6 528 770

## Beschreibung

Die Erfindung geht aus von einem Kochfeld nach dem Oberbegriff des Anspruchs 1 und von einem Verfahren zum Betreiben eines Kochfelds nach dem Oberbegriff des Anspruchs 12.

Aus der WO 2005/043737 A2 ist ein Induktionskochfeld mit wenigstens einer ersten Heizzone bekannt, die zwei unabhängig heizbare Heizelemente aufweist, die in einem Normalbetriebsmodus über eine erste Schaltvorrichtung mit einer ersten Stromversorgungsvorrichtung betrieben werden. Im Normalbetriebsmodus können abhängig von einer Größe eines Gargutbehälters bzw. Topfs, der auf der Heizzone angeordnet ist, beide Heizelemente oder nur ein Heizelement der Heizzone betrieben werden.

Ferner sind aus dem Stand der Technik Induktionskochfelder mit weiteren Heizzonen zum Heizen weiterer Gargutbehälter bzw. Töpfe bekannt, die im Normalbetriebsmodus über eine zweite Schaltvorrichtung mit einer zweiten Stromversorgungsvorrichtung betrieben werden.

Die Aufgabe der Erfindung besteht insbesondere darin, ein gattungsgemäßes Kochfeld mit einem Sonderbetriebsmodus bereitzustellen, in dem eine Heizleistung der ersten Heizzone über eine maximale Leistung der ersten Stromversorgungsvorrichtung hinaus erhöht werden kann und in dem im Normalbetriebsmodus die erste Heizzone mit beiden Heizelementen und die weitere Heizzone gleichzeitig betrieben werden können.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Kochfeld, insbesondere von einem Induktionskochfeld, mit wenigstens einer ersten Heizzone, die zumindest zwei unabhängig heizbare Heizelemente aufweist, die in einem Normalbetriebsmodus über eine erste Schaltvorrichtung mit einer ersten Stromversorgungsvorrichtung betrieben sind, und mit zumindest einer weiteren Heizzone, die im Normalbetriebsmodus über eine zweite Schaltvorrichtung mit einer zweiten Stromversorgungsvorrichtung betrieben ist.

Es wird vorgeschlagen, dass das Kochfeld ein Schaltelement zum Herstellen einer Stromversorgungsverbindung zwischen der zweiten Stromversorgungsvorrichtung und einem der Heizelemente der ersten Heizzone umfasst, wobei die Stromversorgungsverbindung in einem Sonderbetriebsmodus zur Erhöhung einer Heizleistung der ersten Heizzone hergestellt wird. Dadurch kann erreicht werden, dass die zweite Stromversorgungsvorrichtung nur bei eingeschaltetem Sonderbetriebsmodus bzw. nur genau dann, wenn wirklich eine die maximale Leistung der ersten Stromversorgungsvorrichtung übertreffende Heizleistung angefordert ist, zur Versorgung der ersten Heizzone herangezogen wird. Es kann insbesondere erreicht werden, dass die zweite Stromversorgungsvorrichtung im Normalmodus, und zwar auch dann, wenn beide Heizelemente der ersten Heizzone im Betrieb sind, stets zum Betreiben der weiteren Heizzone zur Verfügung steht.

Als Heizzone soll in diesem Zusammenhang ein Bereich zum Aufstellen eines einzelnen Gargutbehälters bzw. Topfs bezeichnet werden, wobei die Größe und die Form der Heizzone durch das Zu- und Abschalten von Heizelementen variierbar sein können. Obwohl der Erfindungsgedanke wegen der dort eingesetzten Hochfrequenztechnik hauptsächlich im Bereich von Induktionskochfeldern gewinnbringend einsetzbar ist, ist prinzipiell auch eine Verwendung im Zusammenhang mit Kochfeldern mit ohmschen Heizelementen denkbar.

Insbesondere dann, wenn die Heizelemente als Induktionsspulen ausgebildet sind, kann ein Intermodulationsbrummen beim Betrieb mehrerer Heizelemente mit unterschiedlichen Frequenzen vermieden werden. Das Intermodulationsbrummen kann besonders sicher vermieden werden, wenn das Kochfeld eine Synchronisationsleitung zum Synchronisieren der Stromversorgungsvorrichtungen umfasst. Zum Synchronisieren der Stromversorgungsvorrichtungen kann ein Frequenzgeber einer ersten Stromversorgungsvorrichtung als Master und ein Frequenzgeber der zweiten Stromversorgungsvorrichtung als Slave eingesetzt werden. Die Frequenzgeber der Stromversorgungsvorrichtungen können besonders raumsparend und kostengünstig als anwendungsspezifische integrierte Schaltungen (ASICs) ausgebildet sein, die jeweils einen Wechselrichter der Stromversorgungsvorrichtung steuern. Die anwendungsspezifischen integrierten Schaltungen können ihrerseits von einem niederfrequent schaltenden Mikrocontroller betrieben sein, der zusammen mit dem ASIC und dem Wechselrichter auf einer gemeinsamen Schaltplatine angeordnet sein kann, die die Schaltvorrichtung trägt. Es sind auch Ausgestaltungen der Erfindung denkbar, in denen die beiden Schaltvorrichtungen von einer gemeinsamen Schaltplatine getragen sind.

Ein komfortables, kurzfristiges Erhöhen der Heizleistung kann durch ein Schaltmittel zum manuellen Aktivieren des Sonderbetriebsmodus erreicht werden. Ein Überhitzen des Kochfelds kann vermieden werden, wenn sich der Sonderbetriebsmodus nach dem Ablauf einer voreingestellten Zeit automatisch deaktiviert. Der Sonderbetriebsmodus kann dadurch als kurzzeitiger Heizleistungsschub betrachtet werden. Es sind ferner Ausgestaltungen der Erfindung denkbar, in denen der Sonderbetriebsmodus beim Erreichen einer Temperaturschwelle selbsttätig deaktiviert wird.

Eine Überlastung der zweiten Stromversorgungsvorrichtung kann vermieden werden, wenn die weitere Heizzone im Sonderbetriebsmodus deaktiviert ist. Dies kann entweder dadurch erreicht werden, dass die zweite Heizzone für die Dauer des Betriebs im Sonderbetriebsmodus deaktiviert ist oder dadurch, dass ein Einschalten des Sonderbetriebsmodus immer dann blockiert ist, wenn die weitere Heizzone aktiv ist und dass umgekehrt die weitere Heizzone während des Betriebs im Sonderbetriebsmodus nicht zugeschaltet werden kann.

Umfasst das Kochfeld eine Verbindungsleitung zum Verbinden der zweiten Stromversorgungsvorrichtung mit einem der Heizelemente der ersten Heizzone, kann ein Übersprechen der Frequenzen der beiden Stromversorgungsvorrichtungen durch eine entfernte Anordnung derselben zumindest reduziert werden.

Eine Störung durch eine Störfrequenz, wie sie durch eine nicht lineare Überlagerung der Umrichtfrequenzen der beiden Schaltvorrichtungen erzeugt wird, kann kontrolliert werden, wenn eine der Schaltvorrichtungen dazu vorgesehen ist, eine Differenzfrequenz zwischen einer Umrichtfrequenz der ersten Schaltvorrichtung und einer Umrichtfrequenz der zweiten Schaltvorrichtung zu beschränken. Eine hörbare akustische Störung kann vollständig vermieden werden, wenn die Schaltvorrichtung dazu vorgesehen ist, die Differenzfrequenz so zu bestimmen, dass sie außerhalb eines hörbaren Frequenzbands liegt.

Umfasst das Kochfeld eine Schaltvorrichtung zum Verändern der Verknüpfungen zwischen den Stromversorgungsvorrichtungen und den Heizzonen zum Umschalten zwischen dem Normalbetriebsmodus und dem Sonderbetriebsmodus, können die Stromversorgungsvorrichtungen aus konventionellen Kochfeldern weitgehend ohne Änderung in einem erfindungsgemäßen Kochfeld genutzt werden. Eine Anzahl zusätzlicher Verkabelungen kann reduziert werden.

Zusätzliche, einen Arbeitsstrom führende Leitungen können vermieden werden, wenn ein erster Schalter zum Trennen eines ersten Heizelements der ersten Heizzone von der ersten Stromversorgungsvorrichtung in der ersten Schaltvorrichtung angeordnet ist.

Weitere Vorteile hinsichtlich der Einsparung von Verkabelungen können erreicht werden, wenn das Schaltelement zum Verbinden des ersten Heizelements der ersten Heizzone mit der zweiten Stromversorgungsvorrichtung in der zweiten Schaltvorrichtung angeordnet ist. Dadurch können insbesondere im Normalbetrieb auch Strahlungsverluste der Leitungen vermieden werden.

Ferner betrifft die Erfindung ein Verfahren zum Betreiben eines Kochfelds, insbesondere eines Induktionskochfelds, mit wenigstens einer ersten Heizzone, die zumindest zwei unabhängig heizbare Heizelemente aufweist, wobei in einem Normalbetriebsmodus die beiden Heizelemente über eine erste Schaltvorrichtung mit einer ersten Stromversorgungsvorrichtung betrieben werden und eine weitere Heizzone über eine zweite Schaltvorrichtung mit einer zweiten Stromversorgungsvorrichtung betrieben wird.

Es wird vorgeschlagen, dass zum Ein- und Ausschalten eines Sonderbetriebsmodus zur Erhöhung einer Heizleistung der ersten Heizzone ein Schaltelement zum Herstellen einer Stromversorgungsverbindung zwischen der zweiten Stromversorgungsvorrichtung und einem der Heizelemente der ersten Heizzone betätigt wird. Dadurch kann insbesondere ein gattungsgemäßes Kochfeld in einem Sonderbetriebsmodus betrieben werden, in dem eine Heizleistung der ersten Heizzone über eine maximale Leistung der ersten Stromversorgungsvorrichtung erhöht werden kann. Gleichzeitig können im Normalbetriebsmodus beide Heizelemente der ersten Heizzone und die weitere Heizzone gleichzeitig betrieben werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Induktionskochfeld in einer schematischen Darstellung,
- Fig. 2: ein schematisiertes Schaltbild einer Schaltvorrichtung des Indukti- onskochfelds aus Figur 1,
- Fig. 3: ein schematisiertes Schaltbild einer weiteren Schaltvorrichtung des Induktionskochfelds aus Figur 1 und
- Fig. 4: die Schaltvorrichtungen aus den Figuren 2 und 3 in einer weiteren schematisierten Darstellung.

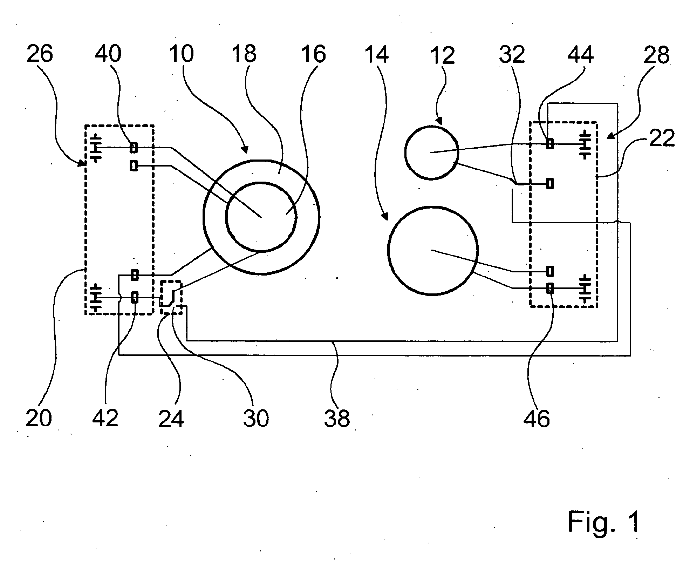

Figur 1 zeigt ein Induktionskochfeld mit insgesamt drei Heizzonen 10, 12, 14. Eine erste Heizzone 10 weist zwei unabhängig betreibbare Heizelemente 16, 18 in der Form von konzentrischen Ringen auf, die in einem Normalbetriebsmodus über eine erste Schaltvorrichtung 20 mit einer ersten Stromversorgungsvorrichtung 26 betrieben werden. Zum Betreiben der Heizelemente 16, 18 hat die Stromversorgungsvorrichtung 26 zwei Ausgänge 40, 42. Die Heizelemente 16, 18 sind als Induktionsspulen ausgebildet und dazu vorgesehen, elektrische Energie an einen Resonatorkreis in einem hier nicht dargestellten Gargutbehälter bzw. Topf zu übertragen, der auf dem Induktionskochfeld angeordnet werden kann. Das Induktionskochfeld umfasst ferner ein Kochtopferkennungssystem, das über die Last bzw. über eine komplexwertige Impedanz der Heizelemente 16, 18 erkennt, ob ein Gargutbehälter auf dem Induktionskochfeld aufgestellt ist und welche Größe der Gargutbehälter hat. Ist der Gargutbehälter deutlich größer als das innere Heizelement 16, so schaltet die erste Schaltvorrichtung 20 zum Heizen des Gargutbehälters neben dem inneren Heizelement 16 auch das erste, äußere Heizelement 18 zu, welches das innere Heizelement 16 ringförmig umschließt.

Die beiden weiteren Heizzonen 12, 14 werden im Normalbetriebsmodus über eine zweite Schaltvorrichtung 22 mit einer zweiten Stromversorgungsvorrichtung 28 betrieben, die ebenfalls zwei Ausgänge 44, 46 hat.

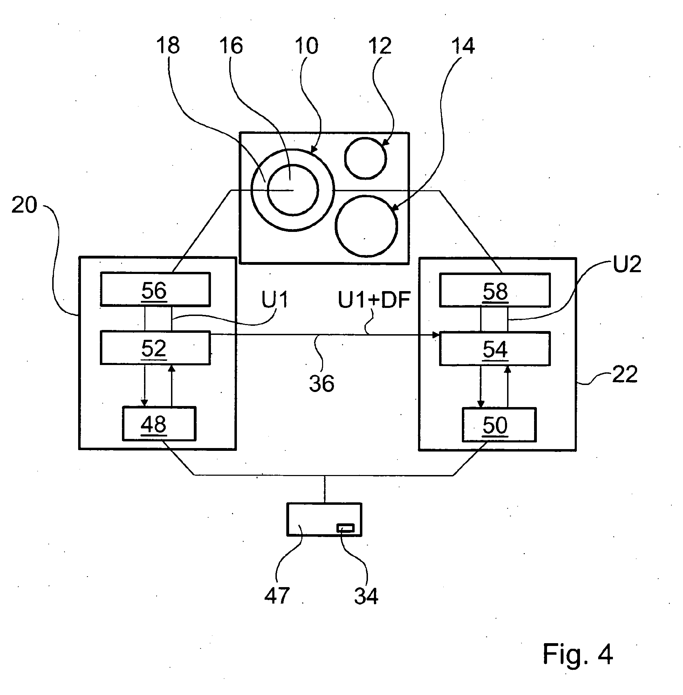

Durch zwei Schaltelemente 30, 32 kann eine Stromversorgungsverbindung zwischen der zweiten Stromversorgungsvorrichtung 28 und dem äußeren, ringförmigen Heizelement 18 der ersten Heizzone 10 hergestellt werden. Dies geschieht dann, wenn ein Bediener über eine Eingabeeinheit 47 (Figur 4), die im vorliegenden Fall als Tastatur ausgebildet ist, den Sonderbetriebsmodus zur Erhöhung einer Heizleistung der ersten Heizzone 10 startet. Die Eingabeeinheit 47 umfasst eine spezielle Taste, die ein Schaltmittel 34 zum manuellen Aktivieren des Sonderbetriebsmodus bildet. Nach dem Ablauf einer voreingestellten Zeit endet der Sonderbetriebsmodus selbsttätig und ohne weiteren Bedienereingriff.

Ist der Sonderbetriebsmodus aktiviert, werden gleichzeitig die beiden weiteren Heizzonen 12, 14 deaktiviert. Dazu wird die von dem entsprechenden Ausgang 44 der zweiten Stromversorgungsvorrichtung 28 erzeugte, hochfrequente Wechselspannung durch das Umlegen bzw. elektronische Umschalten des in die zweite Schaltvorrichtung 22 integrierten Schaltelements 32 auf eine Verbindungsleitung 38 gegeben. Die Verbindungsleitung 38 ist zum Verbinden der zweiten Stromversorgungsvorrichtung 28 mit dem äußeren Heizelement 18 der ersten Heizzone 10 vorgesehen.

Die Verbindungsleitung 38 mündet in eine weitere Schaltvorrichtung 24 zum Verändern der Verknüpfungen zwischen den Stromversorgungsvorrichtungen 26, 28 und den Heizzonen 10, 12, 14. Die weitere Schaltvorrichtung 24 ändert diese Verknüpfungen zum Umschalten zwischen dem Normalbetriebsmodus und dem Sonderbetriebsmodus und umfasst auch das erste Schaltelement 30. Zum Aktivieren des Sonderbetriebsmodus wird durch das Umlegen eines ersten Schaltelements 30 der weiteren Schaltvorrichtung 24 eine Verbindung zwischen dem Ausgang 42 der ersten Stromversorgungsvorrichtung 26 und dem äußeren Heizelement 18 der ersten Heizzone 10 unterbrochen und gleichzeitig eine Verbindung zwischen dem äußeren Heizelement 18 und der Verbindungsleitung 38 bzw. dem Ausgang 44 der zweiten Stromversorgungsvorrichtung 28 hergestellt. Die Schaltelemente 30, 32 werden von einer zentralen Steuereinheit des Induktionskochfelds simultan geschaltet. Die weitere Schaltvorrichtung 24 und damit auch das erste Schaltelement 30 sind in die erste Schaltvorrichtung 20 integriert bzw. unmittelbar neben der ersten Schaltvorrichtung 20 angeordnet.

Das erste Schaltelement 30 dient daher zum Verbinden des äußeren Heizelements 18 der ersten Heizzone 10 mit der zweiten Stromversorgungsvorrichtung 28 und ist in der zweiten Schaltvorrichtung 22 angeordnet bzw. in die zweite Schaltvorrichtung 22 integriert.

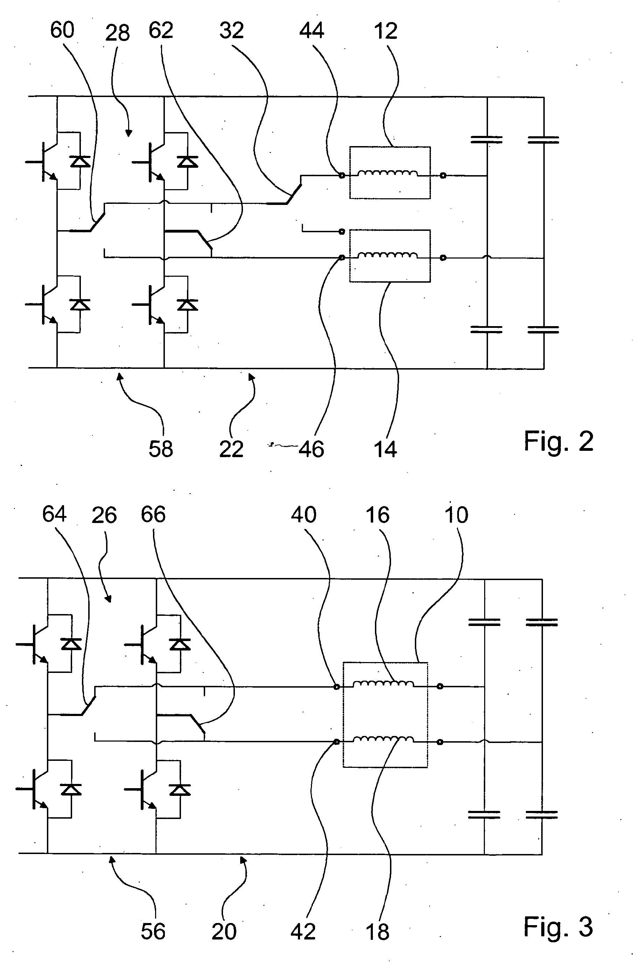

Figur 2 zeigt die rechte Schaltvorrichtung 22 aus Figur 1 in einer detaillierteren Darstellung. Die Schaltvorrichtung 22 umfasst neben einer Wechselrichterschaltung 58 zur unabhängigen Stromversorgung der Heizzonen 12, 14 zwei Schaltelemente 60, 62 zum Umschalten zwischen Untermodi des Normalbetriebsmodus, in denen wahlweise eine der Heizzonen 12, 14 oder beide Heizzonen 12, 14 betrieben werden. Die Wechselrichterschaltung 58 umfasst insgesamt vier Wechselrichterdioden und vier Kondensatoren. Zusätzlich ist das Schaltelement 32 in die Schaltvorrichtung 22 integriert.

Analog zeigt Figur 3 die linke Schaltvorrichtung 20 aus Figur 1 in einer detaillierteren Darstellung. Die Schaltvorrichtung 20 umfasst neben einer Wechselrichterschaltung 56 zur unabhängigen Stromversorgung der Heizelemente 16, 18 der Heizzone 10 zwei Schaltelemente 64, 66 zum Umschalten zwischen Untermodi des Normalbetriebsmodus, in denen wahlweise eines der Heizelemente 16, 18 oder beide Heizelemente 16, 18 der Heizzone 10 betrieben werden.

Figur 4 zeigt die beiden Schaltvorrichtungen 20, 22 und Stromversorgungsvorrichtungen 26, 28 in einer alternativen Darstellung. Jede der Schaltvorrichtungen 20, 22 umfasst einen Mikrocontroller 48, 50, der durch Signale der Eingabeeinheit 47 gesteuert wird. Die Eingabeeinheit 47 umfasst auch eine zentrale Steuereinheit zum Steuern eines gesamten Gargeräts, welches neben dem Induktionskochfeld auch noch einen hier nicht explizit dargestellten Backofen umfasst. Die Mikrocontroller 48, 50 steuern ihrerseits jeweils einen ASIC 52, 54 (Application Specific Integrated Circuit), der die zum Erzeugen einer hochfrequenten Heizspannung notwendigen Hochfrequenzsignale erzeugt und an in den Figuren 2 und 3 detaillierter dargestellten Wechselrichterschaltungen 56, 58 gibt.

Die beiden Schaltvorrichtungen 20, 22 sind durch eine Synchronisationsleitung 36 zum Synchronisieren der Stromversorgungsvorrichtungen 26, 28 in dem Sonderbetriebsmodus miteinander verbunden. Ist der Sonderbetriebsmodus aktiviert, so arbeitet der ASIC 52 der ersten Schaltvorrichtung 20 als Master und gibt die Umrichtfrequenz U1 und eine Differenzfrequenz DF an die als Slave arbeitende weitere Schaltvorrichtung 22 bzw. an den entsprechenden ASIC 52 weiter. Der Mikrocontroller 50 der weiteren Schaltvorrichtung 24 ist dadurch außer Funktion gesetzt. Über diese Synchronisationsleitung 36 kann insbesondere auch ein Phasenkontrollsignal übertragen werden.

Durch diese Verschaltung als Master und Slave und durch die Synchronisationsleitung 36 ist die erste Schaltvorrichtung 20 so ausgelegt, dass im Sonderbetriebsmodus eine Differenzfrequenz DF zwischen einer Umrichtfrequenz U1 der ersten Schaltvorrichtung 20 und einer Umrichtfrequenz U2 der zweiten Schaltvorrichtung 22 stets den Wert Null hat und daher beschränkt ist. Insbesondere liegt die Differenzfrequenz DF stets außerhalb eines hörbaren Frequenzbands von etwa 100 Hz bis 10kHz.

Es sind weitere Ausgestaltungen der Erfindung denkbar, in denen durch die Synchronisationsleitung 36 nur ein bestimmter, von Null verschiedener und von der Umrichtfrequenz U1 abhängiger Grenzwert eines Frequenzbereichs vorgegeben wird, innerhalb dessen die weitere Schaltvorrichtung 22 bzw. der Mikrocontroller 50 die Umrichtfrequenz U2 nach Maßgabe der gewünschten Heizwirkung bestimmen kann, ohne dass die Differenzfrequenz DF zwischen den Umrichtfrequenzen U1, U2 in das hörbare Frequenzband kommen könnte und dadurch ein störendes Brummen oder Rauschen erzeugen könnte.

### Bezugszeichen

- 10: Heizzone
- 12: Heizzone
- 14: Heizzone
- 16: Heizelement
- 18: Heizelement
- 20: Schaltvorrichtung
- 22: Schaltvorrichtung
- 24: Schaltvorrichtung
- 26: Stromversorgungsvorrichtung
- 28: Stromversorgungsvorrichtung
- 30: Schaltelement
- 32: Schaltelement
- 34: Schaltmittel
- 36: Synchronisationsleitung
- 38: Verbindungsleitung
- 40: Ausgang
- 42: Ausgang
- 44: Ausgang
- 46: Ausgang
- 47: Eingabeeinheit
- 48: Mikrocontroller
- 50: Mikrocontroller
- 52: ASIC
- 54: ASIC
- 56: Wechselrichterschaltung
- 58: Wechselrichterschaltung
- 60: Schaltelement
- 62: Schaltelement
- 64: Schaltelement
- 66: Schaltelement
- U1: Umrichtfrequenz
- U2: Umrichtfrequenz
- DF: Differenzfrequenz

## Patentansprüche

1. Kochfeld, insbesondere Induktionskochfeld, mit wenigstens einer ersten Heizzone (10), die zumindest zwei unabhängig heizbare Heizelemente (16, 18) aufweist, die in einem Normalbetriebsmodus über eine erste Schaltvorrichtung (20) mit einer ersten Stromversorgungsvorrichtung (26) betrieben sind, und mit zumindest einer weiteren Heizzone (12, 14), die im Normalbetriebsmodus über eine zweite Schaltvorrichtung (22) mit einer zweiten Stromversorgungsvorrichtung (28) betrieben ist, **gekennzeichnet durch** wenigstens ein Schaltelement (30, 32) zum Herstellen einer Stromversorgungsverbindung zwischen der zweiten Stromversorgungsvorrichtung (28) und einem der Heizelemente (16, 18) der ersten Heizzone (10) in einem Sonderbetriebsmodus zur Erhöhung einer Heizleistung der ersten Heizzone (10).

2. Kochfeld nach Anspruch 1, **dadurch gekennzeichnet, dass** die Heizelemente (16, 18) als Induktionsspulen ausgebildet sind.

3. Kochfeld nach Anspruch 2, **gekennzeichnet durch** eine Synchronisationsleitung (36) zum Synchronisieren der Stromversorgungsvorrichtungen (26, 28) in dem Sonderbetriebsmodus.

4. Kochfeld nach einem der vorhergehenden Ansprüche, **gekennzeichnet durch** ein Schaltmittel (34) zum manuellen Aktivieren des Sonderbetriebsmodus.

5. Kochfeld nach einem der vorhergehenden Ansprüche, **dadurch gekennzeichnet, dass** die weitere Heizzone (12, 14) im Sonderbetriebsmodus deaktiviert ist.

6. Vorrichtung nach einem der vorhergehenden Ansprüche, **gekennzeichnet durch** eine Verbindungsleitung (38) zum Verbinden der zweiten Stromversorgungsvorrichtung (28) mit einem der Heizelemente (16, 18) der ersten Heizzone (10).

7. Kochfeld nach einem der vorhergehenden Ansprüche, **dadurch gekennzeichnet, dass** eine der Schaltvorrichtungen (20, 22) dazu vorgesehen ist, eine Differenzfrequenz (DF) zwischen einer Umrichtfrequenz (U1) der ersten Schaltvorrichtung (20) und einer Umrichtfrequenz (U2) der zweiten Schaltvorrichtung (22) zu beschränken.

8. Kochfeld nach Anspruch 7, **dadurch gekennzeichnet, dass** die Schaltvorrichtung (20) dazu vorgesehen ist, die Differenzfrequenz (DF) so zu bestimmen, dass sie außerhalb eines hörbaren Frequenzbands liegt.

9. Kochfeld nach einem der vorhergehenden Ansprüche, **gekennzeichnet durch** eine Schaltvorrichtung (24) zum Verändern der Verknüpfungen zwischen den Stromversorgungsvorrichtungen (26, 28) und den Heizzonen (10, 12, 14) zum Umschalten zwischen dem Normalbetriebsmodus und dem Sonderbetriebsmodus.

10. Kochfeld nach einem der vorhergehenden Ansprüche, **dadurch gekennzeichnet, dass** ein erstes Schaltelement (30) zum Trennen eines ersten Heizelements (18) der ersten Heizzone (10) von der ersten Stromversorgungsvorrichtung (26) in der ersten Schaltvorrichtung (20) angeordnet ist.

11. Kochfeld nach Anspruch 10, **dadurch gekennzeichnet, dass** das Schaltelement (32) zum Verbinden des ersten Heizelements (18) der ersten Heizzone (10) mit der zweiten Stromversorgungsvorrichtung (28) in der zweiten Schaltvorrichtung (22) angeordnet ist.

12. Verfahren zum Betreiben eines Kochfelds, insbesondere eines Induktionskochfelds, mit wenigstens einer ersten Heizzone (10), die zumindest zwei unabhängig heizbare Heizelemente (16, 18) aufweist, wobei in einem Normalbetriebsmodus die beiden Heizelemente (16, 18) über eine erste Schaltvorrichtung (20) mit einer ersten Stromversorgungsvorrichtung (26) betrieben werden, und wobei wenigstens eine weitere Heizzone (12, 14) über eine zweite Schaltvorrichtung (22) mit einer zweiten Stromversorgungsvorrichtung (28) betrieben wird, **dadurch gekennzeichnet, dass** zum Ein- und Ausschalten eines Sonderbetriebsmodus zur Erhöhung einer Heizleistung der ersten Heizzone (10) ein Schaltelement (30, 32) zum Herstellen einer Stromversorgungsverbindung zwischen der zweiten Stromversorgungsvorrichtung (28) und einem der Heizelemente (16, 18) der ersten Heizzone (10) betätigt wird.

## Claims

1. Cooking hob, particularly induction cooking hob, with at least one first heating zone (10) having at least two independently heatable heating elements (16, 18), which in a normal operating mode are operated by way of a first switching device (20) with a first current supply device (26), and with at least one further heating zone (12, 14), which in the normal operating mode is operated by way of a second switching device (22) with a second current supply device (28), **characterised by** at least one switching element (30, 32) for producing a current supply connection between the second current supply device (28) and one of the heating elements (16, 18) of the first heating zone (10) in a special operating mode for increasing a heat output of the first heating zone (10).

2. Cooking hob according to claim 1, **characterised in that** the heating elements (16, 18) are constructed as induction coils.

3. Cooking hob according to claim 2, **characterised by** a synchronisation line (26) for synchronising the current supply devices (26, 28) in the special operating mode.

4. Cooking hob according to any one of the preceding claims, **characterised by** a switching means (34) for manual activation of the special operating mode.

5. Cooking hob according to any one of the preceding claims, **characterised in that** the further heating zone (12, 14) is deactivated in the special operating mode.

6. Device according to any one of the preceding claims, **characterised by** a connecting line (38) for connecting the second current supply device (28) with one of the heating elements (16, 18) of the first heating zone (10).

7. Cooking hob according to any one of the preceding claims, **characterised in that** one of the switching devices (20, 22) is provided for the purpose of restricting a difference frequency (DF) between a conversion frequency (U1) of the first switching device (20) and a conversion frequency (U2) of the second switching device (22).

8. Cooking hob according to claim 7, **characterised in that** the switching device (20) is provided for the purpose of so determining the difference frequency (DF) that it lies outside an audible frequency band.

9. Cooking hob according to any one of the preceding claims, **characterised by** a switching device (24) for changing the couplings between the current supply devices (26, 28) and the heating zones (10, 12, 14) for switching over between the normal operating mode and the special operating mode.

10. Cooking hob according to any one of the preceding claims, **characterised in that** a first switching element (30) is arranged for separating a first heating element (18) of the first heating zone (10) from the first current supply device (26) in the first switching device (20).

11. Cooking hob according to claim 10, **characterised in that** the switching element (32) is arranged for connecting the first heating element (18) of the first heating zone (10) with the second current supply device (28) in the second switching device (22).

12. Method of operating a cooking hob, particularly an induction cooking hob, with at least one first heating zone (10) having at least two independently heatable heating elements (16, 18), wherein in a normal operating mode the two heating elements (16, 18) are operated by way of a first switching device (20) with a first current supply device (26), and wherein at least one further heating zone (12, 14) is operated by way of a second switching device (22) with a second current supply device (28), **characterised in that** a switching element (30, 32) for producing a current supply connection between the second current supply device (28) and one of the heating elements (16, 18) of the first heating zone (10) is actuated for switching on and off a special operating mode for increasing a heat output of the first heating zone (10).

## Revendications

1. Plaque de cuisson, notamment plaque de cuisson à induction, comprenant au moins une première zone de chauffe (10) qui comporte au moins deux éléments chauffants (16, 18) pouvant être chauffés de manière indépendante qui fonctionnent avec un premier dispositif d'alimentation en courant (26) par le biais d'un premier dispositif de commutation (20) dans un mode de fonctionnement normal, et comprenant au moins une autre zone de chauffe (12, 14) qui fonctionne avec un second dispositif d'alimentation en courant (28) par le biais d'un second dispositif de commutation (22) dans le mode de fonctionnement normal, **caractérisée par** au moins un élément de commutation (30, 32) pour l'établissement d'une connexion d'alimentation en courant entre le second dispositif d'alimentation en courant (28) et un des éléments chauffants (16, 18) de la première zone de chauffe (10) dans un mode de fonctionnement spécial pour augmenter une puissance de chauffe de la première zone de chauffe (10).

2. Plaque de cuisson selon la revendication 1, **caractérisée en ce que** les éléments chauffants (16, 18) sont exécutés en tant que bobines d'induction.

3. Plaque de cuisson selon la revendication 2, **caractérisée par** une ligne de synchronisation (36) pour synchroniser les dispositifs d'alimentation en courant (26, 28) dans le mode de fonctionnement spécial.

4. Plaque de cuisson selon l'une des revendications précédentes, **caractérisée par** un moyen de commutation (34) pour l'activation manuelle du mode de fonctionnement spécial.

5. Plaque de cuisson selon l'une des revendications précédentes, **caractérisée en ce que** l'autre zone de chauffe (12, 14) est désactivée dans le mode de fonctionnement spécial.

6. Plaque de cuisson selon l'une des revendications précédentes, **caractérisée par** une ligne de connexion (38) pour connecter le second dispositif d'alimentation en courant (28) à l'un des éléments chauffants (16, 18) de la première zone de chauffe (10).

7. Plaque de cuisson selon l'une des revendications précédentes, **caractérisée en ce que** l'un des dispositifs de commutation (20, 22) est prévu pour limiter une fréquence différentielle (DF) entre une fréquence de conversion (U1) du premier dispositif de commutation (20) et une fréquence de conversion (U2) du second dispositif de commutation (22).

8. Plaque de cuisson selon la revendication 7, **caractérisée en ce que** le dispositif de commutation (20) est prévu pour déterminer la fréquence différentielle (DF) de manière à ce qu'elle soit située en dehors d'une bande de fréquence audible.

9. Plaque de cuisson selon l'une des revendications précédentes, **caractérisée par** un dispositif de commutation (24) pour modifier les connexions entre les dispositifs d'alimentation en courant (26, 28) et les zones de chauffe (10, 12, 14) pour commuter entre le mode de fonctionnement normal et le mode de fonctionnement spécial.

10. Plaque de cuisson selon l'une des revendications précédentes, **caractérisée en ce qu'**un premier élément de commutation (30) pour séparer un premier élément chauffant (18) de la première zone de chauffe (10) du premier dispositif d'alimentation en courant (26) est situé dans le premier dispositif de commutation (20).

11. Plaque de cuisson selon la revendication 10, **caractérisée en ce que** l'élément de commutation (32) pour connecter le premier élément chauffant (18) de la première zone de chauffe (10) au second dispositif d'alimentation en courant (28) est situé dans le second dispositif de commutation (22).

12. Procédé pour faire fonctionner une plaque de cuisson, notamment une plaque de cuisson à induction, comprenant au moins une première zone de chauffe (10) qui comporte au moins deux éléments chauffants (16, 18) pouvant être chauffés de manière indépendante, les deux éléments chauffants (16, 18) fonctionnant avec un premier dispositif d'alimentation en courant (26) par le biais d'un premier dispositif de commutation (20) dans un mode de fonctionnement normal, et au moins une autre zone de chauffe (12, 14) fonctionnant avec un second dispositif d'alimentation en courant (28) par le biais d'un second dispositif de commutation (22), **caractérisée en ce que,** pour enclencher et déclencher un mode de fonctionnement spécial pour augmenter une puissance de chauffe de la première zone de chauffe (10), on actionne un élément de commutation (30, 32) pour l'établissement d'une connexion d'alimentation en courant entre le second dispositif d'alimentation en courant (28) et un des éléments chauffants (16, 18) de la première zone de chauffe (10).
